# FASCICULE DE BREVET EUROPEEN

(11) **EP 2 225 099 B1**
(45) Date de publication et mention de la délivrance du brevet: **12.03.2014**
(21) Numéro de dépôt: 08866604.5
(22) Date de dépôt: 19.12.2008
(51) Int. Cl.: B32B 3/12, E04C 2/36

(54) **PROCEDE DE FABRICATION D'UN PANNEAU COMPRENANT AU MOINS UN CORPS EN NID-D'ABEILLES ET UNE PREMIERE PEAU REALISEE EN MATERIAU COMPOSITE**
VERFAHREN ZUR HERSTELLUNG EINER PLATTE MIT MINDESTENS EINEM ZELLKÖRPER UND EINER ERSTEN HAUT AUS EINEM VERBUNDWERKSTOFF
METHOD FOR MAKING A PANEL INCLUDING AT LEAST ONE CELLULAR BODY AND A FIRST SKIN MADE OF A COMPOSITE MATERIAL

(30) Priorité: 21.12.2007 BE 200700615
(43) Date de publication de la demande: 08.09.2010
(73) Titulaire: Sonaca S.A., 6041 Gosselies (BE)
(72) Inventeur: KLEIN, Philippe, F-59460 Jeumont (FR); GUEUNING, Dimitri, B-1330 Rixensart (BE); POULAERT, Bernard, B-1470 Baisy-Thy (BE)
(74) Mandataire: Ilgart, Jean-Christophe
(86) Numéro de dépôt international: PCT/EP2008/068014
(87) Numéro de publication internationale: WO 2009/083494

(56) Documents cités:
- EP-A- 0 628 406
- EP-A- 0 722 826
- WO-A-97/25198
- DE-A1- 4 111 638

## Description

### DOMAINE TECHNIQUE

La présente invention se rapporte de façon générale à un procédé de fabrication d'un panneau en matériau composite, et plus spécifiquement d'un panneau comprenant au moins un corps en nid-d'abeilles contre lequel est plaquée au moins une peau extérieure, et plus préférentiellement deux peaux extérieures disposées de part et d'autre du corps en nid-d'abeilles, afin de former un panneau dit « sandwich ».

L'invention se rapporte de préférence à un procédé de fabrication de panneaux tels que ceux habituellement rencontrés dans le domaine aéronautique, qui constitue une application particulière pour la présente invention.

A ce titre, la mise en oeuvre de l'invention peut indifféremment conduire à l'obtention d'un panneau sensiblement plan, ou bien à l'obtention d'un panneau dit à simple ou à double courbure classiquement rencontré dans la constitution des fuselages et des surfaces portantes des aéronefs, telle que les ailes.

### ETAT DE LA TECHNIQUE ANTERIEURE

De l'art antérieur, on connaît des procédés de fabrication de panneaux « sandwich » dits à cuisson unique, ou encore à une « seule cuisson », dont la particularité réside dans le fait de placer dans un autoclave une structure empilée intégrant l'ensemble des éléments constitutifs du panneau désiré, puis d'opérer une étape de cuisson dans des conditions déterminées afin d'obtenir ce panneau.

Pour exemple, la structure empilée présente, successivement dans une direction d'empilement :
- un premier empilement de plis de fibres pré-imprégnées de résine ;
- un ou plusieurs films adhésifs ;
- un corps en nid-d'abeilles ;
- un ou plusieurs autres films adhésifs ; et
- un second empilement de plis de fibres pré-imprégnées de résine.

Cette structure empilée est placée dans un autoclave où elle est soumise à une température de l'ordre de 180°C, et à une pression de plusieurs bars. Durant cette cuisson, la résine des premier et second empilements se polymérise pour former respectivement les deux peaux extérieures du panneau de part et d'autre du corps en nid-d'abeilles, tandis que les films adhésifs polymérisent dans un même temps afin de générer un collage des peaux sur le corps en nid-d'abeilles.

Tout d'abord, il est noté que ce type de procédé à cuisson unique se révèle particulièrement intéressant du fait de sa simplicité de mise en oeuvre, notamment par rapport à d'autres types de procédés connus, dits à deux ou à trois cuissons, dans lesquels la structure empilée est complétée progressivement, en étant soumise successivement à différentes cuissons.

Cependant, dans les structures empilées destinées à subir une cuisson unique, un premier problème réside dans la difficulté de maintenir la résine de l'empilement supérieur des plis de fibres pré-imprégnées, qui a tendance à migrer à l'intérieur des cellules du corps en nid-d'abeilles sous l'effet de la gravité et de la forte pression appliquée, combiné à une viscosité faible de cette résine à la température de polymérisation. Une telle migration de la résine peut conduire à un produit fini dont les peaux, également dénommés laminés, présentent des défauts de porosité, et/ou des défauts de teneur en fibres et/ou résines. Cela est néfaste en terme de résistance mécanique procurée.

Pour pallier cet inconvénient, il a été proposé, comme cela est notamment montré dans le document WO 97/25198, de disposer un film formant barrière d'étanchéité à la résine entre l'empilement supérieur de plis de fibres pré-imprégnées, et le corps en nid-d'abeilles. Néanmoins, en raison de l'élasticité et de la flexibilité de ce film à la température de polymérisation de la résine, le film est susceptible de se déformer et de pénétrer légèrement à l'intérieur des cellules du corps en nid-d'abeilles sous l'action de la résine, comme décrit dans le document WO 97/25198, de sorte que le problème de migration de la résine n'est pas entièrement résolu. Ce même document propose, pour résoudre de manière plus satisfaisante le problème posé, de mettre en place un élément additionnel rigide entre le film formant barrière d'étanchéité, et le corps en nid-d'abeilles. Cependant, même si l'adjonction de cet élément rigide au sein de la structure empilée empêche le film formant barrière et la résine de pénétrer au sein des cellules du corps en nid-d'abeilles, elle complexifie sensiblement la structure empilée, ce qui se traduit d'ailleurs par une masse globale accentuée de la structure empilée, et du panneau obtenu après cuisson.

Les structures empilées destinées à subir une cuisson unique présentent un second problème lié au comportement du corps en nid-d'abeilles durant la cuisson. En effet, durant la phase unique de cuisson pendant laquelle la pression appliquée peut atteindre trois bars ou plus, il existe un risque notable d'écrasement du corps en nid-d'abeilles qui n'est pas encore rigidifié/consolidé, risque qui est d'ailleurs augmenté en cas de mouvements des plis de fibres pré-imprégnées, se traduisant par des mouvements néfastes du corps en nid-d'abeilles.

Pour pallier ce problème, le document précité WO 97/25198 propose un système complexe assurant le maintien des plis de fibres pré-imprégnées les uns par rapport aux autres, à leurs périphéries. Cela permet d'éviter leur mouvement, ainsi que celui du corps en nid-d'abeilles durant la cuisson. Cependant, pour la mise en place des moyens de maintien, il est généralement nécessaire de prévoir des plis de fibres pré-imprégnées à des dimensions plus importantes que nécessaire, ce qui génère une sur-consommation de matière, d'ailleurs accentuée par la présence même des moyens de maintien coopérant avec les bords périphériques étendus des plis.

### EXPOSÉ DE L'INVENTION

L'invention a donc pour but de proposer un procédé de fabrication d'un panneau remédiant aux inconvénients mentionnés ci-dessus, relatifs aux réalisations de l'art antérieur.

Pour ce faire, l'invention a pour objet un procédé de fabrication d'un panneau comprenant au moins un corps en nid-d'abeilles et une première peau réalisée en matériau composite plaquée contre ledit corps, ledit procédé comprenant une étape de cuisson d'une structure empilée pourvue :
- du corps en nid-d'abeilles ;
- d'un film pré-imprégné d'une première résine présentant une température de polymérisation T1 ; et
- d'un premier empilement de plis de fibres pré-imprégnées d'une seconde résine présentant une température de polymérisation T2 supérieure à T1, ladite structure empilée étant réalisée de sorte que ledit film soit au moins en partie agencé entre ledit premier empilement et ledit corps en nid-d'abeilles ;
ladite étape de cuisson comportant une première phase visant à réaliser, à partir dudit film, une barrière rigide d'étanchéité vis-à-vis de la seconde résine, par polymérisation de ladite première résine à une température de cuisson au moins égale à T1 et inférieure à T2, suivie d'une seconde phase visant à réaliser, à partir dudit premier empilement de plis, ladite première peau, par polymérisation de ladite seconde résine à une température de cuisson au moins égale à T2.

En d'autres termes, l'invention propose un procédé de fabrication de panneau du type à cuisson unique, en prévoyant néanmoins plusieurs phases successives de cuisson à des températures différentes, chacune dédiée à la formation d'un ou plusieurs éléments donnés du panneau.

Plus spécifiquement, la première phase de cuisson permet l'obtention d'une barrière rigide d'étanchéité vis-à-vis de la seconde résine entre le corps en nid-d'abeilles et les plis de fibres pré-imprégnées de la seconde résine. La température appliquée lors de cette première phase étant inférieure à la température T2, la seconde résine reste maintenue sur ses plis en l'état d'un liquide visqueux, et ne risque donc pas de fluer en direction du corps en nid-d'abeilles.

Ensuite, lors de la seconde phase s'effectuant à une température plus élevée permettant la polymérisation de la seconde résine, celle-ci est empêchée de migrer dans les cellules du corps en nid-d'abeilles, en raison de l'obtention préalable de la barrière d'étanchéité retenant cette résine. Ainsi, la/les peaux du panneau, également dénommées laminés, peuvent être obtenues sans risquer la pénétration/migration de la résine au sein des cellules du corps central en nid-d'abeilles. Cela permet avantageusement de disposer de peaux dénuées de défaut de porosité et de défaut de teneur en fibre et/ou en résine, pour une meilleure résistance mécanique globale.

Dans ce procédé où la structure empilée présente préférentiellement sa forme définitive dès le début de l'étape de cuisson, permettant de l'assimiler à un procédé à cuisson unique, la première phase d'obtention de la barrière rigide d'étanchéité permet simultanément de rigidifier/consolider le corps en nid-d'abeilles. D'ailleurs, il est fait en sorte que durant la polymérisation de la première résine, la barrière adhère fixement au corps en nid-d'abeilles. Par conséquent, la rigidification mécanique du corps permet à ce dernier de mieux supporter la seconde phase de cuisson généralement réalisée à pression importante, et de limiter ainsi les risques d'écrasement durant cette phase visant à la polymérisation de la seconde résine imprégnant les plis de fibres, prenant par exemple la forme de nappes à fibres unidirectionnelles ou encore la forme de tissus à fibres bidirectionnelles.

A ce titre, la barrière rigide d'étanchéité obtenue lors de la première phase de cuisson est préférentiellement lisse, sans défaut de géométrie. Cette spécificité est préférentiellement obtenue grâce à l'application d'une faible pression durant ladite première phase.

La géométrie est alors ensuite imposée aux peaux en contact obtenues ultérieurement, ce qui permet avantageusement à celles-ci de présenter également des surfaces lisses satisfaisantes, en particulier exemptes d'ondulations telles que celles habituellement rencontrées sur les panneaux obtenus par les procédés à cuisson unique de l'art antérieur. A titre indicatif, ces ondulations rencontrées dans l'art antérieur résultaient de l'effet dit « telegraphing », correspondant à l'impression des extrémités de parois des cellules du nid-d'abeilles sur les plis des empilements.

Il est noté que l'invention est remarquable en ce sens qu'elle limite fortement voire éradique entièrement les risques de dégradation du corps en nid-d'abeilles ainsi que les risques d'intrusion de la résine dans ce corps, tout en prévoyant une structure empilée disposant d'un nombre raisonnable d'éléments, assurant une masse et un coût acceptables.

L'invention s'applique non seulement à la formation de panneaux présentant un unique corps en nid-d'abeilles, mais également à la formation de panneaux présentant plusieurs corps en nid-d'abeilles répartis sur la surface du panneau, sans sortir du cadre de l'invention. Dans ce dernier cas, les parties du panneau situées entre deux corps en nid-d'abeilles adjacents peuvent être constituées par des zones de contact des deux peaux, formant zones monolithiques servant par exemple à la fixation du panneau sur d'autres structures.

Comme évoqué ci-dessus, la mise en oeuvre de l'invention peut conduire à l'obtention d'un panneau sensiblement plan / plat. Alternativement, le procédé est destiné à l'obtention d'un panneau présentant une simple courbure ou une double courbure. A titre informatif, les panneaux à simple courbure sont dits « développables », et présentent une génératrice rectiligne impliquant qu'ils peuvent être « déroulés » sur un plan. En revanche, les panneaux à double courbure, tels que les panneaux de fuselage du cockpit d'un aéronef, ne sont pas « développables » et ne disposent donc pas de génératrice rectiligne, c'est-à-dire qu'ils ne peuvent pas être « déroulés » sur un plan. Effectivement, ils présentent une première courbure, par exemple dans la direction longitudinale du panneau, ainsi qu'une seconde courbure distincte de la première, par exemple dans la direction transversale de ce même panneau.

Quoi qu'il en soit, le procédé selon l'invention permet l'obtention de panneaux de grandes dimensions, pouvant atteindre plusieurs mètres carrés, tels que des panneaux présentant une longueur d'environ trois mètres, pour une largeur d'environ 1 mètre.

Enfin, il est précisé que la première résine est de préférence choisie parmi les résines dites à polymérisation mixte (de l'anglais « Dual Cure »), ces résines offrant l'avantage de polymériser à une température donnée, sans risquer de se dégrader jusqu'à une autre température donnée, sensiblement supérieure, par exemple de plusieurs dizaines de degrés. Ainsi, on prévoit alors l'utilisation préférentielle d'une résine à polymérisation mixte polymérisant à la température T1, et ne présentant aucun risque de dégradation jusqu'à la température de polymérisation T2 de la seconde résine.

De préférence, ladite structure empilée est également pourvue d'un second empilement de plis de fibres pré-imprégnées de ladite seconde résine, ladite structure empilée étant réalisée de sorte que ledit corps en nid-d'abeilles soit agencé entre ledit premier empilement et ledit second empilement,
ladite seconde phase de l'étape de cuisson visant également à réaliser, à partir dudit second empilement de plis, ladite seconde peau, par polymérisation de ladite seconde résine à une température de cuisson au moins égale à T2. Cela permet donc l'obtention d'un panneau « sandwich » à deux peaux extérieures, disposées de part et d'autre du corps en nid-d'abeilles.

Il est cependant noté que le second empilement de plis pourrait être pré-imprégné d'une résine différente de celle du premier empilement, sans sortir du cadre de l'invention, mais ayant tout de même une température de polymérisation supérieure à la température T1.

De préférence, les premier et second empilements de ladite structure empilée présentent respectivement des bords en contact sur une zone de recouvrement, celle-ci s'étendant préférentiellement sur toute la périphérie des premier et second empilements.

Dans un tel cas, il est de préférence mis en place, antérieurement à ladite étape de cuisson, un clinquant de maintien en appui sur ladite zone de recouvrement, ce clinquant suivant donc de préférence les périphéries en contact des premier et second empilements. Le clinquant permet donc d'intensifier la pression dans la zone de recouvrement généralement monolithique, ce qui assure un maintien des plis les uns par rapport aux autres durant la seconde phase de cuisson. Par conséquent, durant cette phase, les mouvements des plis sont limités voire supprimés, ce qui limite ou supprime également les mouvements potentiels du corps en nid-d'abeilles, les risques d'endommagement/d'écrasement de ce dernier s'en trouvant donc encore davantage diminués. Par ailleurs, la présence du clinquant permet l'obtention d'une épaisseur homogène de la zone monolithique de recouvrement sur laquelle elle appuie.

De manière préférentielle, ledit film pré-imprégné est agencé au sein de ladite structure empilée de manière à envelopper ledit corps en nid-d'abeilles, de sorte que suite à ladite première phase de l'étape de cuisson, ladite barrière rigide d'étanchéité obtenue prenne la forme d'une coque de rigidification entourant le corps en nid-d'abeilles, et solidarisée à ce dernier en raison de la nature préférentiellement adhésive du film pré-imprégné. Ici encore, cette coque de section ouverte ou fermée, de préférence de géométrie identique ou similaire à celle de la périphérie du corps en nid-d'abeilles prise dans la même section, permet de rigidifier au mieux le corps, et donc d'amoindrir encore davantage les risques d'endommagement/d'écrasement de ce corps lors de la seconde phase de cuisson.

Toujours de manière préférentielle, il est mis en place, antérieurement à ladite étape de cuisson, une vessie étanche recouvrant ladite structure empilée, ainsi qu'un dispositif d'isolation thermique recouvrant ladite vessie étanche. Le dispositif d'isolation thermique permet alors d'homogénéiser la température au sein de l'espace fermé par la vessie, et donc au sein de la structure empilée, pour une polymérisation plus homogène des éléments de la structure.

Préférentiellement, ladite structure empilée intègre par ailleurs un film adhésif agencé entre ledit film pré-imprégné et ledit premier empilement, pour un scellement des plis du premier empilement sur le corps en nid-d'abeilles. Une configuration analogue peut préférentiellement être prévue pour le second empilement de plis.

De préférence, ladite température de polymérisation T1 est de l'ordre de 120°C, et ladite température de polymérisation T2 de l'ordre de 180°C. D'une façon plus générale, les températures T1 et T2 sont choisies de manière à ce qu'une différence entre celles-ci soit au moins égale à 40°C, ou encore plus préférentiellement au moins égale 60°C.

Enfin, on prévoit que ladite première phase de l'étape de cuisson est réalisée à une température de cuisson comprise entre 120°C et 140°C, à une pression comprise entre 1 et 1,5 bars, et que ladite seconde phase de l'étape de cuisson est réalisée à une température de cuisson comprise entre 180°C et 190°C, à une pression comprise entre 3 et 4 bars. Plus généralement, la première phase est réalisée à une pression inférieure ou égale à 2 bars, et plus préférentiellement inférieure à 1,5 bars, tandis que la seconde phase est réalisée à une pression supérieure ou égale à 3 bars.

Par ailleurs, on prévoit préférentiellement que ladite première phase de cuisson soit réalisée pendant une période allant de quinze à quarante minutes, et que ladite seconde phase de cuisson soit réalisée pendant une période allant de une heure et demi à deux heures et demi. Par ailleurs, la seconde phase est de préférence mise en oeuvre dans la continuité de la première. Ainsi, il suffit d'augmenter la température et la pression en fin de première phase de cuisson, pour initier la seconde.

L'invention a également pour objet une structure empilée décrite ci-dessus, à savoir destinée à former, par cuisson, un panneau comprenant au moins un corps en nid-d'abeilles et une première peau réalisée en matériau composite plaquée contre ledit corps, ladite structure empilée étant pourvue :
- du corps en nid-d'abeilles ;
- d'un film pré-imprégné d'une première résine présentant une température de polymérisation T1 ; et
- d'un premier empilement de plis de fibres pré-imprégnées d'une seconde résine présentant une température de polymérisation T2 supérieure à T1, ladite structure empilée étant réalisée de sorte que ledit film soit au moins en partie agencé entre ledit premier empilement et ledit corps en nid-d'abeilles.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 montre un panneau destiné à être obtenu par la mise en oeuvre d'un procédé de fabrication selon l'invention ;
- la figure 2 représente une vue en coupe transversale passant par le plan P de la figure 1 ;
- les figures 3a et 3b sont des vues schématiques montrant différentes opérations successives permettant de réaliser une structure empilée destinée à subir une étape de cuisson pour former le panneau montré sur les figures 1 et 2 ;
- la figure 4 représente une vue schématique montrant la mise en place de la structure empilée montrée sur la figure 3b, sur un outillage spécifique, avant l'étape de cuisson ;
- la figure 5 représente un graphe schématisant l'étape de cuisson, l'axe des abscisses correspondant au temps en minute, l'axe des ordonnées de gauche correspondant à la température appliquée en degré Celsius, et l'axe des ordonnées de droite correspondant d'une part à la pression appliquée en bar, et d'autre part au vide appliqué, également en bar ; et
- les figures 6a et 6b sont des vues schématiques montrant une partie de la structure empilée de la figure 4, à différents stades au cours de l'étape de cuisson.

### EXPOSÉ DÉTAILLÉ DE MODES DE RÉALISATION PRÉFÉRÉS

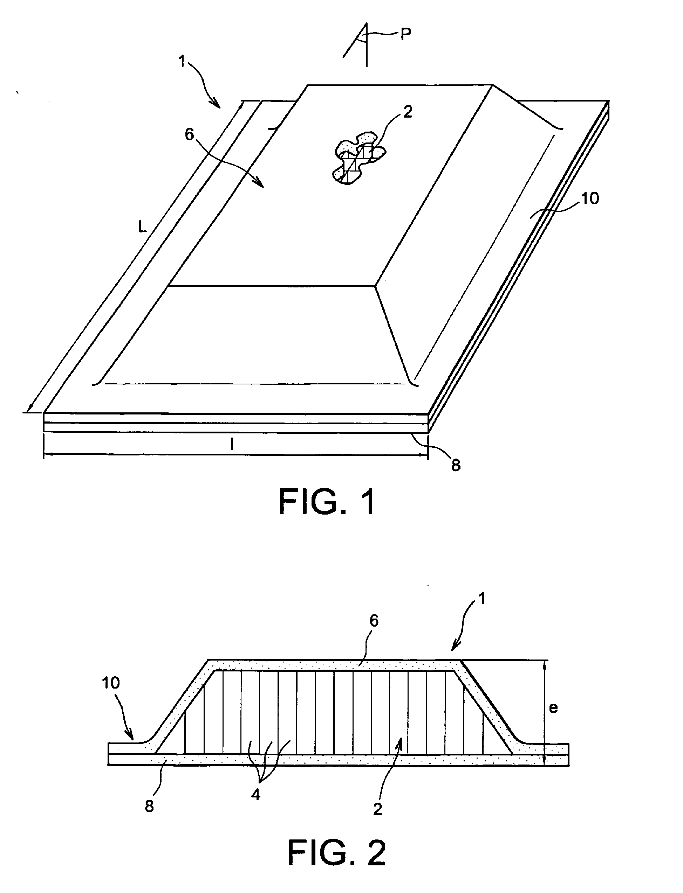

En référence tout d'abord aux figures 1 et 2, on peut apercevoir un panneau 1 obtenu par différentes étapes successives réalisées lors de la mise en oeuvre d'un procédé de fabrication d'un panneau, selon un mode de réalisation préféré de la présente invention. Dans ce mode, le panneau obtenu est de forme sensiblement plane, et par exemple globalement carré ou rectangulaire, d'une épaisseur e comprise entre 10 et 100 mm au niveau du corps en nid-d'abeilles, et d'une longueur L et d'une largeur l chacune prévue entre 0,5 et 3 mètres, voire plus. A titre indicatif, il est noté que celui-ci trouve une application particulière dans le domaine de l'aéronautique en tant que panneau de fuselage ou d'aile d'un aéronef. Naturellement, comme évoqué ci-dessus, il pourrait s'agir d'un panneau à simple courbure ou à double courbure, sans sortir du cadre de l'invention.

Le panneau 1, dit panneau « sandwich », présente une âme formée par un corps en nid-d'abeilles 2, dont la forme peut-être quelconque. Dans le mode de réalisation représenté, le corps 2 présente en section quelconque parallèle aux axes des cellules 4 du nid-d'abeilles, une forme trapézoïdale, avec des petite et grande bases du trapèze orientées sensiblement perpendiculairement aux axes des cellules 4. De plus, les sommets correspondant aux arêtes du corps 2 sont rayonnés, dans le but d'assurer une transition progressive des plis de fibres entre les différentes faces de ce corps, étant donné que ces plis sont effectivement destinés à être plaqués contre le nid-d'abeilles, comme cela sera détaillé ultérieurement. A titre d'exemple, le rayonnage appliqué pour éviter la présence d'arêtes vives et de ce fait favoriser la transition progressive des plis de fibres, présente un rayon d'au moins 20 mm.

Le panneau 1 comprend également une première peau ou peau supérieure 6 en matériau composite, épousant la petite base supérieure du trapèze ainsi que ses deux côtés latéraux, tandis qu'une seconde peau ou peau inférieure 8 en matériau composite épouse la base inférieure du trapèze. Les périphéries des deux peaux 6, 8 sont de préférence en contact, formant ainsi une zone de recouvrement périphérique monolithique 10.

A titre indicatif, même si cela n'a pas été représenté, le panneau pourrait présenter plusieurs corps en nid-d'abeilles répartis sur la surface du panneau, sans sortir du cadre de l'invention.

Le procédé de fabrication d'un tel panneau débute par la réalisation d'une structure empilée, destinée à subir ultérieurement une étape de cuisson.

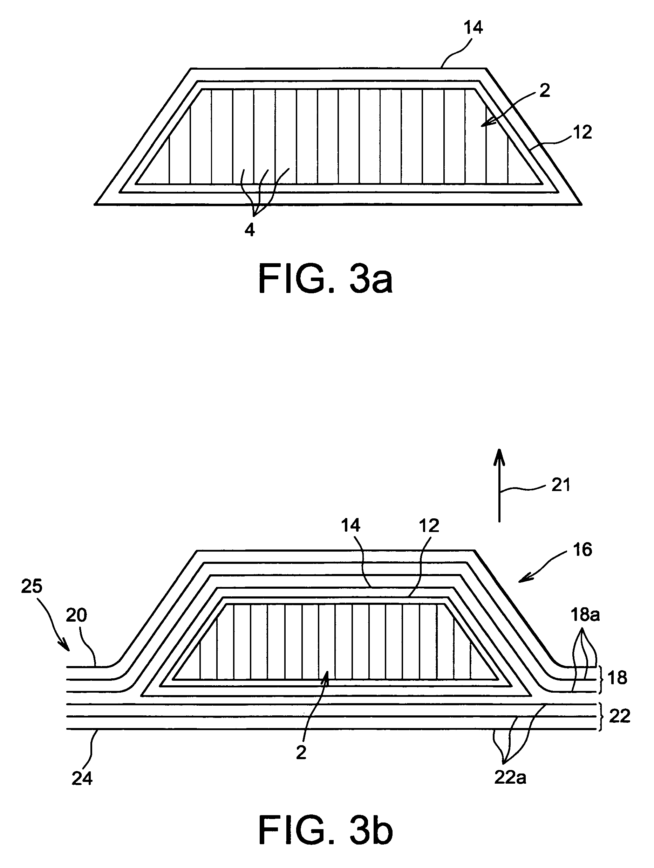

La figure 3a montre que la structure empilée est destinée à intégrer le corps en nid-d'abeilles 2, présentant sa forme et ses dimensions finales. Une première opération consiste à envelopper ce corps 2 d'un film 12 pré-imprégné d'une première résine présentant une température de polymérisation T1, ce film étant très préférentiellement adhésif. L'enveloppement réalisé est de préférence tel que le film 12 recouvre la totalité de la surface extérieure du corps 2 avec lequel il est de préférence en contact, le film 12 présentant donc en section quelconque parallèle aux axes des cellules 4 du nid-d'abeilles, également une forme trapézoïdale, avec des petite et grande bases du trapèze orientées sensiblement perpendiculairement aux axes des cellules 4. Néanmoins, si cette configuration du film 12 entraîne la formation d'un espace entièrement fermé, au sein duquel se trouve le corps 2, il pourrait alternativement être prévu une autre réalisation où l'espace formé par le film resterait ouvert, par exemple au niveau de deux faces latérales opposées du corps 2. Il est plus généralement fait en sorte que le film présente une partie supérieure et une partie inférieure épousant respectivement les faces supérieure et inférieure du corps 2, avec les parties supérieure et inférieure du film reliées entre elles de chaque côté de ce même corps.

Le film 12 peut être réalisé par une ou plusieurs bandes, éventuellement se recouvrant partiellement les unes les autres. La première résine est de préférence choisie parmi les résines dites à polymérisation mixte (de l'anglais « Dual Cure »), polymérisant à la température T1, et ne présentant aucun risque de dégradation jusqu'à une température T2 correspondant à une température de polymérisation d'une seconde résine utilisée dans la structure empilée, comme cela sera décrit ci-après. La température T1 de polymérisation de cette résine, de préférence du type résine Epoxy, est préférentiellement de l'ordre 120°C.

A titre d'exemple indicatif, il peut s'agir de la résine commercialisée par la société Henkel sous la référence « Hysol^{®} EA 9695, Epoxy Film Adhesive ».

D'une manière analogue à celle décrite ci-dessus, le corps 2 enveloppé par le film 12 est à nouveau enveloppé par un film adhésif 14, polymérisant à la température T2. Ainsi, lui aussi forme de préférence un espace fermé dans lequel est logé le corps 2 enveloppé par le film 12, en contact avec le film adhésif 14. Il peut par exemple s'agir d'un film commercialisé sous la référence FM300M^{®} par la société Cytec.

En référence à la figure 3b, la structure empilée 16 est complétée par un premier empilement 18 de plis de fibres 18a pré-imprégnées d'une seconde résine présentant une température de polymérisation T2 supérieure à T1, la température T2 étant en effet de préférence de l'ordre de 180°C.

Les plis ou laminés 18a, de préférence réalisés en matériaux composites thermodurcissables, par exemple à matrice époxy et fibres de carbone continues, unidirectionnelles et/ou bidirectionnelles, sont donc disposés les uns au-dessus des autres selon une direction d'empilement 21 de la structure 16. Le nombre de ces plis formant chacun une couche de l'empilement est déterminé en fonction de l'épaisseur finale désirée pour la peau supérieure du panneau.

Comme visible sur la figure 3b, cet empilement 18 ou empilement supérieur recouvre la face supérieure et les faces latérales du corps 2 en nid-d'abeilles, avant de se prolonger par un bord périphérique 20 s'étendant latéralement au-delà et tout autour de ce corps 2. Ainsi, l'empilement 18 se trouve en contact avec une partie du film adhésif 14.

De manière analogue, la structure empilée 16 est complétée par un second empilement 22 de plis de fibres 22a pré-imprégnées de la seconde résine, ces plis étant de préférence identiques à ceux du premier empilement 18, et prévus en nombre déterminé en fonction de l'épaisseur finale désirée pour la peau inférieure du panneau. Comme visible sur la figure 3b, cet empilement 22 ou empilement inférieur recouvre la face inférieure du corps 2 en nid-d'abeilles, avant de se prolonger par un bord périphérique 24 s'étendant latéralement au-delà et tout autour de ce corps 2. Ainsi, l'empilement 18 se trouve en contact avec l'autre partie du film adhésif 14.

De plus, les bords périphériques 20, 24 sont en contact sur une zone de recouvrement 25 qui s'étend de préférence sur toute la périphérie des empilements 18, 22, c'est-à-dire de façon continue tout autour du corps 2 en nid-d'abeilles.

La structure empilée 16 est donc réalisée afin d'obtenir, successivement dans la direction d'empilement 21, le second empilement 22 de plis 22a, le film adhésif 14, le film pré-imprégné 12, le corps en nid-d'abeilles 2, le film pré-imprégné 12, le film adhésif 14, et le premier empilement 18 de plis 18a.

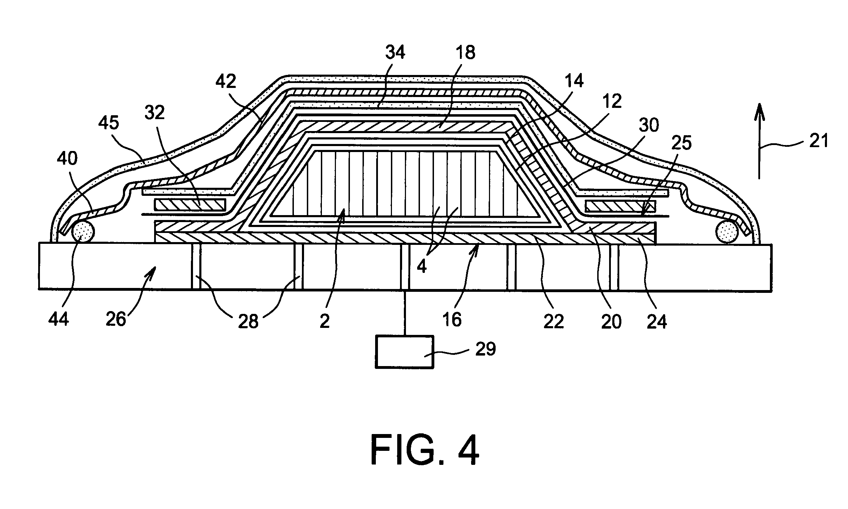

Cette structure 16 peut être directement réalisée sur un outillage spécifique, par empilement successif de ses éléments constitutifs, comme montré sur la figure 4. Cet outillage incorpore tout d'abord un support de la structure 16, référencé 26. Ce support en acier 26 est traversé perpendiculairement, par rapport au plan selon lequel elle s'étend, par une pluralité d'orifices traversants 28 prévus au sein de ce support. Les orifices traversants 28 sont reliés à des moyens de mise en dépression 29 ou mise sous vide, à l'aide d'un réseau de communication fluidique (non référencé) classique et pouvant prendre toute forme connue de l'homme du métier.

Une fois la structure empilée 16 de la figure 3b mise en place sur le support 26 de la figure 4, il est mis en place un film séparateur 30 par dessus l'empilement, ce film étant par exemple du type fluoroplastique déformable et résistant à haute température.

Ensuite, il est mis en place un clinquant de maintien 32 en appui sur la zone de recouvrement 25, ce clinquant, de préférence métallique et de faible épaisseur, étant donc plaqué contre les bords superposés 20, 24, parallèlement à la surface d'appui du support 26. Le clinquant 32 réalisé d'une seule pièce ou à l'aide de plusieurs pièces adjacentes suit donc de manière continue les périphéries en contact des premier et second empilements 18, 22. Ce clinquant a pour fonction d'intensifier la pression dans la zone de recouvrement 25 monolithique durant l'étape ultérieure de pression, ce qui assure un maintien des plis 18a, 22a les uns par rapport aux autres, et donc empêche leur mouvement ainsi que celui du corps en nid-d'abeilles 2.

Ensuite, il est mis en place un tissu drainant 34 par dessus le film séparateur et le clinquant 32, ce tissu étant par exemple du type à fibres de polyester ou de verre.

Le procédé est poursuivi par la formation d'une chambre étanche 40 à l'aide du support en acier 26, sur lequel on vient monter une vessie étanche 42 recouvrant l'ensemble des éléments précités, comme cela est visible sur la figure 4. Pour ce faire, la vessie 42 est plaquée tout autour de la structure empilée 16 et des éléments la recouvrant, sur le support 26, par exemple à l'aide d'une ou plusieurs vis de pression (non représentées) vissée dans ce dernier. Dans ce cas de figure, on peut faire en sorte que la tête de vis écrase un joint d'étanchéité 44 reposant au contact de ce même support 26. Ainsi, le support en acier 26 et la vessie d'étanchéité 42 de l'outillage forment conjointement une chambre étanche 40 au sein de laquelle se trouve la structure empilée 16, qui peut alors subir l'étape de cuisson visant globalement à consolider cette structure 16, afin d'obtenir le panneau 1 déjà décrit.

La vessie 42 est recouverte d'une couverture d'isolation thermique 45, permettant d'homogénéiser la température au sein de la chambre 40. Ainsi, grâce à la présence de cette couverture 45, la température au sein de la chambre 40 à un instant t quelconque durant l'étape de cuisson varie au plus de 15 à 20°C, assurant de ce fait une polymérisation homogène des résines.

Cette étape de cuisson, dite à cuisson unique, est réalisée en plaçant l'ensemble montré sur la figure 1 dans un autoclave, afin d'appliquer des températures et pressions désirées.

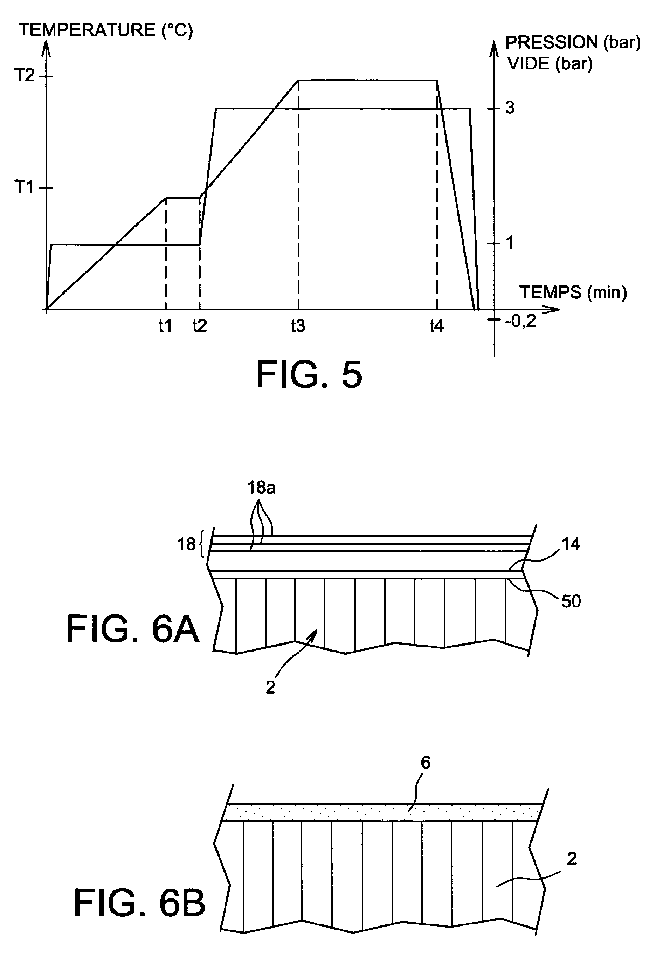

La figure 5 montre le cycle de cuisson opéré. Tout d'abord, il est réalisé une étape de préchauffage visant à amener la température de cuisson à T1, à savoir aux alentours de 120°C, à une vitesse de l'ordre de 0,8°C par minute. Dans un même temps, un vide d'environ -0,2 bar est appliqué par le biais des moyens 29 au sein de la chambre 40, ce vide étant de préférence maintenu durant toute l'étape de cuisson. En outre, une première pression de cuisson est fixée à une valeur faible, comprise entre 1 et 1,5 bars.

A l'instant t1 où l'ensemble de ces paramètres de cuisson sont atteints, la première phase de cuisson peut alors débuter, pour être maintenue pendant environ 30 minutes jusqu'à l'instant t2.

La première phase vise à réaliser, à partir du film 12, une barrière rigide d'étanchéité vis-à-vis de la seconde résine, par polymérisation de la première résine. En effet, la première résine polymérise en raison du fait que la température de cuisson appliquée par l'autoclave est sensiblement égale à sa température de polymérisation. Par conséquent, au cours de la première phase de cuisson, le film 12 se transforme progressivement en une barrière rigide d'étanchéité, prenant la forme d'une coque de rigidification 50 entourant le corps en nid-d'abeilles 2 et se solidarisant à celui-ci en raison de son caractère adhésif. Cette coque 50, au contact et scellée au corps 2, dispose d'une géométrie identique à la géométrie initiale du film 12 enveloppant ce même corps, comme montré partiellement sur la figure 6a.

Durant cette première phase, la température n'est pas suffisamment importante pour polymériser la seconde résine, celle-ci conservant alors une viscosité importante lui permettant d'être maintenue sur ses plis respectifs, et l'empêchant de migrer vers le corps en nid-d'abeilles. Il en est de même pour la résine équipant le film adhésif 14.

Ensuite, avant d'effectuer la seconde phase de cuisson, la structure empilée déjà partiellement polymérisée est conservée dans l'autoclave où une augmentation de la température et de la pression est initiée. La pression est effectivement fixée à une valeur forte, supérieure ou égale à 3 bars, tandis que la température est élevée à T2, c'est-à-dire à une valeur aux alentours de 180°C, avec une vitesse d'augmentation de la température toujours de l'ordre de 0,8°C par minute, en partant de 120°C.

A l'instant t3 où l'ensemble de ces nouveaux paramètres de cuisson sont atteints, la seconde phase de cuisson peut alors débuter, pour être maintenue pendant environ 2 heures jusqu'à l'instant t4.

La seconde phase vise à réaliser, à partir des empilements 18, 22, les peaux extérieures du panneau, par polymérisation de la seconde résine. En effet, la seconde résine polymérise en raison du fait que la température de cuisson appliquée par l'autoclave est sensiblement égale à sa température de polymérisation, tandis qu'à cette même température, les propriétés intrinsèques de la barrière d'étanchéité 50 font qu'elle ne se dégrade pas. Par conséquent, la seconde résine atteignant sa viscosité minimale permettant sa polymérisation est empêchée de migrer vers les cellules du corps en nid-d'abeilles, en raison de la présence de cette barrière 50 qui la retient. Ainsi, les peaux du panneau sont obtenues sans risquer la pénétration de la résine au sein du nid-d'abeilles, pour une meilleure résistance mécanique globale.

De plus, en raison de la polymérisation du film adhésif 14 à cette même température T2, les peaux extérieures 6, 8 se retrouvent collées sur le corps 2 en fin de seconde phase de cuisson, comme cela est partiellement schématisé sur la figure 6b.

Une fois l'étape de cuisson terminée, le panneau 1 obtenu est extrait de la chambre étanche 40, puis le tissu drainant 34, le clinquant 32 et le film séparateur 30 sont à leur tour retirés. A cet égard, il est noté que pour faciliter la suppression des excédants de résine accumulés en bordure de clinquant 32 sur le panneau durant la seconde phase de cuisson à pression élevée, il peut être placé, dans la structure 16, un tissu d'arrachage entre le premier empilement 18 et le film séparateur 30.

Bien entendu, diverses modifications peuvent être apportées par l'homme du métier à l'invention qui vient d'être décrite, uniquement à titre d'exemples non limitatifs.

## Revendications

1. Procédé de fabrication d'un panneau (1) comprenant au moins un corps en nid-d'abeilles et une première peau réalisée en matériau composite plaquée contre ledit corps, ledit procédé comprenant une étape de cuisson d'une structure empilée (16) pourvue :
- du corps en nid-d'abeilles (2) ;
- d'un film (12) pré-imprégné d'une première résine présentant une température de polymérisation T1 ; et
- d'un premier empilement (18) de plis de fibres (18a) pré-imprégnées d'une seconde résine présentant une température de polymérisation T2 supérieure à T1, ladite structure empilée étant réalisée de sorte que ledit film soit au moins en partie agencé entre ledit premier empilement (18) et ledit corps en nid-d'abeilles (2) ;
ladite étape de cuisson comportant une première phase visant à réaliser, à partir dudit film (12), une barrière rigide d'étanchéité (50) vis-à-vis de la seconde résine, par polymérisation de ladite première résine à une température de cuisson au moins égale à T1 et inférieure à T2, suivie d'une seconde phase visant à réaliser, à partir dudit premier empilement de plis (18a), ladite première peau, par polymérisation de ladite seconde résine à une température de cuisson au moins égale à T2.

2. Procédé selon la revendication 1, dans lequel ladite structure empilée est également pourvue d'un second empilement (22) de plis de fibres (22a) pré-imprégnées de ladite seconde résine, ladite structure empilée étant réalisée de sorte que ledit corps en nid-d'abeilles (2) soit agencé entre ledit premier empilement (18) et ledit second empilement (22),
ladite seconde phase de l'étape de cuisson visant également à réaliser, à partir dudit second empilement de plis (22a), ladite seconde peau, par polymérisation de ladite seconde résine à une température de cuisson au moins égale à T2.

3. Procédé selon la revendication 2, dans lequel les premier et second empilements (18, 22) de ladite structure empilée (16) présentent respectivement des bords (20, 24) en contact sur une zone de recouvrement (25).

4. Procédé selon la revendication 3, dans lequel ladite zone de recouvrement (25) s'étend sur toute la périphérie des premier et second empilements.

5. Procédé selon la revendication 3 ou la revendication 4, dans lequel il est mis en place, antérieurement à ladite étape de cuisson, un clinquant de maintien (32) en appui sur ladite zone de recouvrement (25).

6. Procédé selon l'une quelconque des revendications précédentes, dans lequel ledit film pré-imprégné (12) est agencé au sein de ladite structure empilée (16) de manière à envelopper ledit corps en nid-d'abeilles (2), de sorte que suite à ladite première phase de l'étape de cuisson, ladite barrière rigide d'étanchéité (50) obtenue prenne la forme d'une coque de rigidification entourant le corps en nid-d'abeilles (2).

7. Procédé selon l'une quelconque des revendications précédentes, dans lequel il est mis en place, antérieurement à ladite étape de cuisson, une vessie étanche (42) recouvrant ladite structure empilée (16), ainsi qu'un dispositif d'isolation thermique (45) recouvrant ladite vessie étanche (42).

8. Procédé selon l'une quelconque des revendications précédentes, dans lequel ladite structure empilée (16) intègre par ailleurs un film adhésif (14) agencé entre ledit film pré-imprégné (12) et ledit premier empilement (18).

9. Procédé selon l'une quelconque des revendications précédentes, dans lequel ladite température de polymérisation T1 est de l'ordre de 120°C, et ladite température de polymérisation T2 de l'ordre de 180°C.

10. Procédé selon l'une quelconque des revendications précédentes, dans lequel ladite première phase de l'étape de cuisson est réalisée à une température de cuisson comprise entre 120°C et 140°C, à une pression comprise entre 1 et 1,5 bars, et dans lequel ladite seconde phase de l'étape de cuisson est réalisée à une température de cuisson comprise entre 180°C et 190°C, à une pression comprise entre 3 et 4 bars.

11. Structure empilée (16) destinée à former, par cuisson, un panneau comprenant au moins un corps en nid-d'abeilles et une première peau réalisée en matériau composite plaquée contre ledit corps, ladite structure empilée étant pourvue :
- du corps en nid-d'abeilles (2) ;
- d'un film (12) pré-imprégné d'une première résine présentant une température de polymérisation T1 ; et
- d'un premier empilement (18) de plis de fibres (18a) pré-imprégnées d'une seconde résine présentant une température de polymérisation T2 supérieure à T1, ladite structure empilée étant réalisée de sorte que ledit film soit au moins en partie agencé entre ledit premier empilement (18) et ledit corps en nid-d'abeilles (2).

## Patentansprüche

1. Verfahren zur Herstellung einer Platte (1), die mindestens einen Zellkörper und eine erste Haut aufweist, die aus Verbundwerkstoff hergestellt ist, die gegen den Körper angelegt ist, wobei das Verfahren einen Brennschritt einer gestapelten Struktur (16) aufweist, die versehen ist mit:
- dem Zellkörper (2),
- einer Folie (12), die mit einem ersten Harz, das eine Polymerisationstemperatur T1 aufweist, vorgetränkt ist, und
- einer ersten Stapelung (18) von Faserlagen (18a), die mit einem zweiten Harz, das eine zweite Polymerisationstemperatur T2 aufweist, die größer ist als T1, vorgetränkt sind, wobei die gestapelte Struktur derart hergestellt ist, dass die Folie mindestens zum Teil zwischen der ersten Stapelung (18) und dem Zellkörper (2) eingerichtet ist,
wobei der Brennschritt eine erste Phase aufweist, die darauf abzielt, ausgehend von der Folie (12) eine steife Abdichtungsbarriere (50) gegenüber dem zweiten Harz durch Polymerisation des ersten Harzes bei einer Brenntemperatur von wenigstens gleich T1 und kleiner als T2 herzustellen, gefolgt von einer zweiten Phase, die darauf abzielt, ausgehend von der ersten Stapelung von Lagen (18a) die erste Haut durch Polymerisation des zweiten Harzes bei einer Brenntemperatur herzustellen, die wenigstens gleich T2 ist.

2. Verfahren nach Anspruch 1, bei dem die gestapelte Struktur auch mit einer zweiten Stapelung (22) von Faserlagen (22a), die mit dem zweiten Harz vorgetränkt ist, versehen ist, wobei die gestapelte Struktur derart hergestellt ist, dass der Zellkörper (2) zwischen der ersten Stapelung (18) und der zweiten Stapelung (22) eingerichtet ist,
wobei die zweite Phase des Brennschritts ebenfalls darauf abzielt, ausgehend von der zweiten Stapelung von Lagen (22a) die zweite Haut durch Polymerisation des zweiten Harzes bei einer Brenntemperatur wenigstens gleich T2 herzustellen.

3. Verfahren nach Anspruch 2, bei dem die erste und die zweite Stapelung (18, 22) der gestapelten Struktur (16) jeweils Ränder (20, 24) in Berührung auf einem Überlappungsbereich (25) aufweisen.

4. Verfahren nach Anspruch 3, bei dem sich der Überlappungsbereich (25) auf dem gesamten Umfang der ersten und der zweiten Stapelung erstreckt.

5. Verfahren nach Anspruch 3 oder Anspruch 4, bei dem vor dem Brennschritt eine Haltefolie (32) in Auflage auf dem Überlappungsbereich (25) angebracht wird.

6. Verfahren nach einem der vorhergehenden Ansprüche, bei dem die vorgetränkte Folie (12) innerhalb der gestapelten Struktur (16) derart eingerichtet ist, dass der Zellkörper (2) ummantelt ist, so dass im Anschluss an die erste Phase des Brennschritts die erzielte steife Abdichtungsbarriere (50) die Form einer Versteifungsschale annimmt, die den Zellkörper (2) umgibt.

7. Verfahren nach einem der vorhergehenden Ansprüche, bei dem vor dem Brennschritt eine dichte Blase (42), die die gestapelte Struktur (16) abdeckt, sowie eine Wärmeisolationsvorrichtung (45), die die dichte Blase (42) abdeckt, eingerichtet werden.

8. Verfahren nach einem der vorhergehenden Ansprüche, bei dem die gestapelte Struktur (16) außerdem eine Klebefolie (14) integriert, die zwischen der vorgetränkten Folie (12) und der ersten Stapelung (18) eingerichtet ist.

9. Verfahren nach einem der vorhergehenden Ansprüche, bei dem die Polymerisationstemperatur T1 in der Größenordnung von 120 °C liegt, und die Polymerisationstemperatur T2 in der Größenordnung von 180 °C.

10. Verfahren nach einem der vorhergehenden Ansprüche, bei dem die erste Phase des Brennschritts bei einer Brenntemperatur ausgeführt wird, die zwischen 120 °C und 140 °C liegt, bei einem Druck zwischen 1 und 1,5 bar, und bei dem die zweite Phase des Brennschritts bei einer Brenntemperatur ausgeführt wird, die zwischen 180 °C und 190 °C liegt, bei einem Druck zwischen 3 und 4 bar.

11. Gestapelte Struktur (16), die dazu bestimmt ist, durch Brennen eine Platte zu bilden, die mindestens einen Zellkörper aufweist, und eine erste Haut, die aus Verbundwerkstoff hergestellt ist, die gegen den Körper angelegt ist, wobei die gestapelte Struktur Folgendes aufweist:
- einen Zellkörper (2),
- eine Folie (12), die mit einem ersten Harz vorgetränkt ist, das eine Polymerisationstemperatur T1 aufweist, und
- eine erste Stapelung (18) von Faserlagen (18a), die mit einem zweiten Harz vorgetränkt sind, das eine Polymerisationstemperatur T2 aufweist, die größer ist als T1, wobei die gestapelte Struktur derart hergestellt ist, dass die Folie mindestens zum Teil zwischen der ersten Stapelung (18) und dem Zellkörper (2) eingerichtet ist.

## Claims

1. Process for manufacturing a panel (1) comprising at least one honeycomb body and a first skin made from a composite material placed in close contact with said body, said process comprising a step to bake a stacked structure (16) provided with:
- the honeycomb body (2);
- a film (12) pre-impregnated with a first resin with a polymerisation temperature T1; and
- a first stack (18) of fibre layers (18a) pre-impregnated with a second resin with a polymerisation temperature T2 greater than T1, said stacked structure being made such that said film is at least partly arranged between said first stack (18) and said honeycomb body (2);
said baking step comprising a first phase designed to use said film (12), to create a rigid barrier (50) providing a seal from the second resin, by polymerisation of said first resin at a baking temperature equal to at least T1 and less than T2, followed by a second phase designed to produce said first skin from said first stack of layers (18a), by polymerisation of said second resin at a baking temperature equal to at least T2.

2. Process according to claim 1, in which said stacked structure is also provided with a second stack (22) of fibre layers (22a) pre-impregnated with said second resin, said stacked structure being made such that said honeycomb body (2) is arranged between said first stack (18) and said second stack (22),
said second phase of the baking process also being designed to produce said second skin from said second stack of layers (22a), by polymerisation of said second resin at a baking temperature equal to at least T2.

3. Process according to claim 2, in which the first and second stacks (18, 22) of said stacked structure (16) have edges (20, 24) in contact with each other in an overlap zone (25).

4. Process according to claim 3, in which said overlapping zone (25) extends around the entire periphery of the first and second stacks.

5. Process according to claim 3 or claim 4, in which holding foil (32) is installed before said baking step, bearing on said overlapping zone (25).

6. Process according to any one of the previous claims, in which said pre-impregnated film (12) is arranged within said stacked structure (16) so as to surround said honeycomb body (2), such that after said first phase of the baking step, said rigid sealing barrier (50) obtained takes the form of a stiffening shell surrounding the honeycomb body (2).

7. Process according to any one of the previous claims, in which before said baking step, a sealed bladder (42) is put into place covering said stacked structure (16), together with a thermal insulation device (45) covering said sealed bladder (42).

8. Process according to any one of the previous claims, in which said stacked structure (16) also includes an adhesive film (14) arranged between said pre-impregnated film (12) and said first stack (18).

9. Process according to any one of the previous claims, in which said polymerisation temperature T1 is of the order of 120°C and said polymerisation temperature T2 is of the order of 180°C.

10. Process according to any one of the previous claims, in which said first phase in the baking step is done at a baking temperature between 120°C and 140°C, at a pressure between 1 and 1.5 bars, and in which said second phase in the baking step is done at a baking temperature of between 180°C and 190°C, at a pressure of between 3 and 4 bars.

11. Stacked structure (16) designed to form a panel comprising at least one honeycomb body and a first skin made from a composite material placed in contact with said body, by baking, said stacked structure being provided with:
- the honeycomb body (2);
- a film (12) pre-impregnated with a first resin with a polymerisation temperature T1; and
- a first stack (18) of fibre layers (18a) pre-impregnated with a second resin with a polymerisation temperature T2 greater than T1, said stacked structure being made such that said film is at least partly arranged between said first stack (18) and said honeycomb body (2).
